# EUROPEAN PATENT APPLICATION

(11) **EP 3 135 736 A1**
(43) Date of publication of application: **01.03.2017**
(21) Application number: 15182149.3
(22) Date of filing: 24.08.2015
(51) Int. Cl.: C09D 5/00

(54) **COMPOSITION FOR FORMING TRANSPARENT CONDUCTIVE LAYER**

(71) Applicant: Solvay SA, 1120 Bruxelles (BE)
(72) Inventor: KIM, Young-Keun, Ulsan (KR); WON, Du-Hyun, Busan (KR); JANG, Sung-Il, Busan (KR); CHOI, Beom-Jin, Seoul (KR)
(74) Representative: Mross, Stefan P.M.

(57) **Abstract**

The present invention concerns compositions comprising at least one carbon nanotube, at least one thermal acid generator, and at least one solvent, and methods for making the same. The compositions according to the present invention can be used for forming a transparent conductive layer particularly useful as a transparent electrode, an antistatic layer, and/or an electromagnetic interference shield layer in a display device application.

## Description

### FIELD OF THE INVENTION

The present invention relates to a carbon nanotube (CNT) composition and to a layer made from said composition suitable for use as a transparent electrode, an antistatic layer, and/or an electromagnetic interference (EMI) shield layer for display device, such as liquid crystal display (LCD) device and organic light-emitting diode (OLED) device.

### BACKGROUND OF THE INVENTION

Display devices, such as liquid crystal display (LCD) devices, are used for a television, a projector, a mobile phone, a PDA, a vehicle, etc., and such devices usually comprise plural transparent conductive layers for various purposes, including a transparent electrode, an antistatic layer, and an electromagnetic interference (EMI) shield layer. Conventional conductive materials for the transparent conductive layer in such display device are transparent conductive oxides (TCO), such as indium tin oxide (ITO), indium zinc oxide (IZO) and antimony tin oxide (ATO). The materials are typically deposited by using sputtering. However, this process is rather complicated and costly. Also, these materials are disadvantageous because many cracks may be generated upon their formation (lack of flexibility), and indium which is the main element of ITO and IZO is a limited resource that is becoming quickly exhausted these days.

Carbon nanotube (CNT) is one of the conductive materials which are the candidates to replace TCO in forming transparent conductor in electronics application.

Development of CNT composition which can be suitably used for forming a transparent conductive layer is desired in the art.

### DESCRIPTION OF THE INVENTION

The purpose of the present invention is to provide CNT-containing coating compositions having particular advantageous properties, which can be suitably used for forming a transparent electrode, an antistatic layer, and/or an EMI shield layer in electronic applications, such as in display devices. Another purpose of the invention is to provide CNT-containing compositions which can be suitably used for forming a layer exhibiting an excellent reliability. Further purpose of the present invention is to provide CNT-containing compositions having excellent dispersibility in aqueous solution.

The present invention therefore relates to compositions comprising at least one carbon nanotube (CNT), at least one thermal acid generator (TAG), and at least one solvent.

The compositions according to the present invention and the transparent conductive layer made therefrom can display superior stability at high temperature, such as at least 85°C. Also, the layer made from the compositions according to the present invention can attain excellent reliability. For instance, the layer of the present invention may not undergo any substantial decrease or increase in terms of its various properties, such as hardness, layer thickness, transparency, haze, and surface resistance, upon exposure to harsh external environment. Particularly, the layer of the invention can show excellent reliability against heat and moisture. In addition, the compositions according to the present invention can show excellent stability.

Further, the present invention provides transparent electrodes, antistatic layers, and/or EMI shield layers, which are particularly suitable for display devices, obtained or obtainable from the compositions according to the present invention.

### DETAILED DESCRIPTION OF THE INVENTION

In the present invention, a carbon nanotube is understood to denote in particular fullerenes having cylindrical (or tubular) nanostructure, of which length(L)-to-diameter(D) ratio (L/D) is often at least 100. Examples of the carbon nanotube include single-wall carbon nanotubes (SWCNT), multi-wall carbon nanotubes (MWCNT), and derivatives thereof (e.g. carbon nanobuds). SWCNT is particularly preferred in the present invention. Without wishing to be bound by any theory, use of SWCNT in this application is believed to enable achieving required transparency as well as high conductivity, because of its shape. In the present invention, the length of the SWCNT is often no more than 10 micron, preferably no more than 5 micron.

In the present invention, a substrate is understood to denote in particular a solid, in particular a transparent solid on which a layer of material can be deposited using the composition according to the invention. Examples of such substrates include a glass substrate, and transparent solid polymers, for example polyethylene terephthalate(PET), polyethylene naphthalene dicarboxylate, polycarbonate(PC), polyethersulfone(PES), polyimide(PI), cyclic olefin copolymer(COC), styrene copolymers, polyethylene, polypropylene, and any combination thereof. Preferably, the substrate is in the form of a sheet.

In the present invention, "alkyl groups" is understood to denote in particular a straight chain, branched chain, or cyclic hydrocarbon groups usually having from 1 to 20 carbon atoms, preferably having from 1 to 8 carbon atoms. Examples of alkyl groups include methyl, ethyl, propyl, isopropyl, butyl, isobutyl, sec-butyl, tert-butyl, pentyl, neopentyl, hexyl, cyclopropyl, cyclobutyl, cyclopentyl, and cyclohexyl.

In the present invention, "alkoxy groups" is understood to denote in particular a straight chain, branched chain, or cyclic hydrocarbon group usually having from 1 to 20 carbon atoms, preferably from 1 to 8 carbon atoms, singularly bonded to oxygen (Alk-O-).

In the present invention, "aryl groups" is understood to denote in particular any functional group or substituent derived from an aromatic ring. In particular, the aryl groups can have 6 to 20 carbon atoms, preferably 6 to 12 carbon atoms, in which some or all of the hydrogen atoms of the aryl group may or may not be substituted with other groups, especially alkyl groups, alkoxy groups, aryl groups, or hydroxyl groups. The aryl groups are preferably optionally substituted phenyl groups, naphthyl groups, anthryl group and phenanthryl group.

In the present invention, the carbon nanotube is typically used in an amount of 0.01 to 1 wt % relative to a total weight of the composition. By comprising the carbon nanotube in the above range, the composition according to the present invention can exhibit good conductivity and coatability as well as transparency.

In the present invention, the thermal acid generator (TAG) is understood to denote in particular a chemical compound which comprises at least one functional group which releases acid upon thermal activation. In particular, the TAG can comprise at least one blocked acid group and at least hydrophobic group. In the present invention, "blocked acid group" is understood to denote in particular a functional group containing one or more acid groups of which acid release is deactivated by being bonded to one or more other chemical group ("blocking group"). Nature of such bonding may be ionic bond or covalent bond. The blocked acid group may be de-blocked via one or more activation processes to become activated. The activation process may be conducted by controlling temperature, photo-condition, chemical treatment, or any combinations thereof. In the present invention, the activation of the blocked acid group in TAG is primarily performed by the control of temperature. The hydrophobic group may be at least one alkyl group or at least one aryl group optionally substituted with one or more alkyl groups. Particularly, the deblocking temperature may range from 90 °C to 195 °C. Particular examples of the TAG include K-PURE™ TAG series and CXC series (available from KING INDUSTRIES), but the present invention is not limited thereto.

In the present invention, the TAG preferably comprises at least one blocked acid selected from the group consisting of blocked sulfonic acid, blocked phosphoric acid, blocked antimonic acid, blocked triflic acid, and any combination thereof. Particularly preferred examples of blocked acid include blocked sulfonic acid and blocked phosphoric acid. In the present invention, the blocking group of such blocked acid group may be amine group, covalent group, metal group, and quaternary ammonium group.

In the present invention, particular examples of the TAG include blocked *p*-toluene sulfonic acid, blocked dodecylbenzene sulfonic acid, blocked dinonylnaphthalene monosulfonic acid, blocked dinonylnaphthalene disulfonic acid, blocked hexafluoroantimonate, blocked hexafluorophosphonate, blocked trifluoromethane sulfonate, and blocked perfluorobutane sulfonate, but the present invention is not limited thereto.

In the present invention, the TAG may be used in an amount of 0.01 to 3 wt% relative to a total weight of the composition. By comprising the TAG in the above range, excellent reliability can be attained in the layer obtained or obtainable from the composition according to the present invention.

In the present invention, the solvent in the composition according to the present invention is selected from the group consisting of water ; aliphatic alcohols, such as methanol, ethanol, isopropanol, butanol, n-propylalcohol, ethylene glycol, propylene glycol, butanediol, neopentyl glycol, 1,3-pentanediol, 1,4-cyclohexanedimethanol, diethyleneglycol, polyethelene glycol, polybutylene glycol, dimethylolpropane, trimethylolpropane, sorbitol, esterification products of the afore-mentioned alcohols ; aliphatic ketones, such as methyl cellosolve, propyleneglycol methylether, diacetone alcohol, ethylacetate, butylacetate, acetone and methylethylketone ; ethers such as tetrahydrofuran, dibutyl ether, mono- and polyalkylene glycol dialkyl ethers ; aliphatic carboxylic acid esters ; aliphatic carboxylic acid amides ; aromatic hydrocarbons ; aliphatic hydrocarbons ; acetonitrile ; aliphatic sulfoxides ; and any combination thereof. Preferred solvents are water, isopropanol, ethylene glycol, propylene glycol methyl ether, propylene glycol methyl ether acetate, toluene, xylene, methyl ethyl ketone, dibutyl ether, butyl acetate, or any combination thereof.

In the present invention, the solvent is used in an amount of comprising the solvent in an amount of 30 to 99 wt %, preferably 60 to 97 wt %, more preferably 90 to 95 wt % relative to a total weight of the composition.

In the present invention, the composition may further comprise at least one silicone-based monomer and/or binder. Particularly, the silicone-based monomer and/or binder can be selected from the group consisting of trialkoxysilane, trichlorosilane, tetrachlorosilane, aminosilane-based binders, tetraalkoxysilane-based binders, and any combination thereof. Preferable examples of the monomer and/or binder are tetraethoxysilane (TEOS), tetramethoxysilane (TMOS), TEOS-based binder, TMOS-based binder and any combination thereof. More preferably, the composition according to the present invention comprises TEOS binder.

In the present invention, the composition may comprise other binder separately from or in combination with the silicon-based monomer and/or binder. The binder in the present invention may be an organic compound, an inorganic compound, or a hybrid compound thereof. Examples of the organic binder include polyesters, such as polyethylene terephthalate, polybutylene terephthalate, and polyethylene naphthalate; polyimides, such as polyimide, and polyamideimide; polyamides, such as polyamide 6, polyamide 6, 6, polyamide 12, and polyamide 11; fluororesins, such as polyvinylidene fluoride, polyvinyl fluoride, polytetrafluoroethylene, ethylenetetrafluoroethylene copolymer, and polychlorotrifluoroethylene; vinyl resins, such as polyvinyl alcohol, polyvinyl ether, polyvinyl butyral, polyvinyl acetate, and polyvinyl chloride; epoxy resin; oxetane resin; xylene resin; aramide resin; polyimide silicone; polyurethane; polyurea; melamine resin; phenol resin; polyether; organosilicones; poly(ethylene oxide)s (PEO); acrylic resin, and their copolymers.

In the present invention, the composition preferably comprises the silicone-based monomer and/or binder as a sole binder system or as a main binder system of the composition. Especially, when the layer to be formed by the composition of the present invention is to be deposited on glass substrate, this binder system is particularly preferred because it allows excellent hardness and adhesion to the substrate.

In the present invention, the binder is typically used in an amount of 1 to 30 wt %, preferably 3 to 20 wt %, more preferably 5 to 10 wt % relative to a total weight of the composition.

The composition according to the present invention may further comprise at least one dispersant. Without wishing to be bound by any theory, function of the dispersant is believed to enable attaining an excellent compatibility of the CNT with the composition system to assure its dispersibility in the solvent, and with other components, such as silicone-based binder solution, without causing any substantial deterioration of the qualities of CNT (e.g. agglomeration of CNTs).

In the present invention, the dispersant is used in an amount of 0.01 to 1 wt % relative to a total weight of the composition.

In a further particular embodiment, the composition according to the present invention further comprises at least one additive selected from the group consisting of a conductive compound, a coupling agent, a surfactant, an inhibitor, a catalyst, an antioxidant agent, and any combination thereof.

In the present invention, a conductive compound is understood to denote in particular a chemical which functions to increase conductivity of composition. Such conductive compounds can be selected from the group consisting of metal oxide compounds, metal compounds, conductive polymers, conductive carbon compounds, ionic liquids, and any combination thereof. Particular examples of the conductive compounds include indium tin oxide (ITO), indium zinc oxide (IZO), antimony tin oxide (ATO), silver nanowire, poly(fluorene)s, polyphenylenes, polypyrenes, polyazulenes, polynaphthalenes, poly(pyrrole)s (PPY), polycarbazoles, polyindoles, polyazepines, polyanilines (PANI), poly(thiophene)s (PT), poly(3,4-ethylenedioxythiophene) (PEDOT), poly(p-phenylene sulfide) (PPS), poly(3,4-ethylenedioxythiophene) polystyrene sulfonate (PEDOT:PSS), poly(acetylene)s (PAC), poly(p-phenylene vinylene) (PPV), graphene, 1-ethyl-3-methyl-imidazolium tetrachloroaluminate, 1-butyl-3-methyl-imidazolium tetrachloroaluminate, 1-ethyl-3-methyl-imidazolium acetate, 1-butyl-3-methyl-imidazolium acetate, 1-ethyl-3-methyl-imidazolium ethylsulfate, 1-butyl-3-methyl-imidazolium methylsulfate, 1-ethyl-3-methyl-imidazolium thiocyanate, 1-butyl-3-methyl-imidazolium thiocyanate, 1-ethyl-3-methyl-imidazolium bis(trifluoromethanesulfonyl)imide, 1-ethyl-3-methyl-imidazolium tetracyanoborate, 1-butyl-1-methyl-pyrrolidinium dicyanamide, 1-ethyl-3-methyl-imidazolium tetrafluoroborate, 1-ethyl-3-methyl-imidazolium trifluroacetate, 1-ethyl-3-methyl-imidazolium bis(fluoromethylsulfonyl)imide, and any combination thereof, but the present invention is not limited thereto.

In the present invention, a coupling agent is understood to function to aid an adhesion to a substrate when applied to the substrate. Such coupling agent can be selected, for example, from the group consisting of ammonia, chlorosilane, monomeric aminosilane, γ-glycidoxypropyltrimethoxysilane, γ-glycidoxypropyltuethyoxysilane, γ-glycidoxypropylethyldimethoxysilane, γ-glycidoxypropylethyldiethoxysilane, vinyltrimethoxysilane, vinyltriethoxysilane, β-glycidoxypropyltrimethoxysilane, N-β-aminoethyl-γ-aminopropyltrimethoxysilane, N-β-aminoethyl-γ-aminopropyltriethoxysilane, γ-mercaptopropyltrimethoxysilane, γ-chloropropyltrimethoxysilane, γ-acryloxypropyldimethoxysilane and any combination thereof. Preferred examples of the coupling agent are chlorosilane, monomeric amino silane, vinyltrimethoxysilane, and vinyltriethoxysilane.

In the present invention, a surfactant is understood to denote in particular a material that lowers the surface tension of a liquid, the interfacial tension between two liquids, or that between a liquid and a solid, and/or that prevents flocculation. The surfactant particularly useful in preventings flocculation in the present invention preferably comprises a polymer with at least one pigment affinic group, or at least one insoluble pigment complex. Preferred examples of the surfactant include BYK^{®} surfactants (obtainable from BYK Additives & Instruments), such as acrylate copolymer type of BYK^{®} surfactants. The surfactant particularly useful in lowering the surface tension of a liquid, the interfacial tension between two liquids, or that between a liquid and a solid in the present invention preferably comprises at least one selected from the group consisting of silicone-modified polyacrylate, polymethylalkylsiloxane, polyether-modified siloxane, polyether-modified polysiloxane, aralkyl-modified polymethylalkylsiloxane, polyether-modified acryl functional siloxane, polyether-modified acryl-functional polydimethylsiloxane, polyether-modified dimethylpolysiloxane, polyether-modified polydimethylsiloxane, polyester-modified polydimethylsiloxane, polyether-modified polymethylalkylsiloxane, polyester-modified polymethylalkylsiloxane, polyether-modified hydroxy-functional polydimethylsiloxane, polyester-modified hydroxy-functional polydimethylsiloxane, and polyester-modified multi-acrylic functional polydimethylsiloxane, but the present invention is not limited thereto. Preferred examples of the surfactant include BYK^{®} surfactants (obtainable from BYK Additives & Instruments), such as polyether-modified polydimethylsiloxane type of BYK^{®} surfactants.

In the present invention, an inhibitor can be optionally added to the composition in order to keep the adequate extent of the polymerization. The examples of the inhibitor include hydroquinone, dialkylacetylenedicarboxylate, dimethylacetylenedicarboxylate, diethylenedicarboxylate, dibutylacetylenedicarboxylate, metylbutylacetylenedicarboxylate, methylethylacetylenedicarboxylate, and any combination thereof. Preferred inhibitors are hydroquinone, dialkylacetylenedicarboxylate, and dimethylacetylenedicarboxylate.

In the present invention, a catalyst can be used to accelerate a formation of binder from the respective monomer in the composition according to the present invention. Amines, organic or inorganic acids, metals or metal salts, peroxides, or any combination thereof can be used as the catalyst in the present invention. The non-limiting examples of the amines include ammonia, methylamine, dimethylamine, trimethylamine, ethylamine, diethylamine,triethylamine, n-propylamine, isopropylamine, di-n-propylamine, di-isopropylamine, tri-n-propylamine, n-butylamine, isobutylamine, di-n-butylamine, di-isobutylamine, tri-n-butylamine, n-pentylamine, di-n-pentylamine, tri-n-pentylamine, dicyclohexylamine, aniline, 2,4-dimethylpyridine, 4,4-trimethylenebis(1-methylpiperidine), 1,4-di-azabicyclo[2,2,2]octane, N,N-dimethylpiperazine, cis-2,6-dimethylpiperazine, trans-2,5-dimethylpiperazine, 4,4-methylenebis(cyclohexylamine), stearylamine, 1,3-di-(4-piperidyl)propane, N,N-dimethylpropanolamine, N,N- dimethylhexanolamine, N,N-dimethyloctanolamine, N,N-diethylethanolamine, 1-piperidineethanol, 4-piperidinol, and any combination thereof. The non-limiting examples of organic or inorganic acids include acetic acid, propionic acid, butyric acid, valeric acid, caproic acid, maleic acid, stearic acid, hydrochloric acid, nitric acid, sulfuric acid, phosphoric acid, chloric acid, hypochlorous acid, and any combination thereof. The non-limiting examples of metals and metal salts include palladium, palladium acetate, palladium acetylacetonate, silver, silver acetylacetonate, platinum, platinum acetylacetonate, ruthenium, ruthenium acetylacetonate, ruthenium carbonyls, gold, copper, copper acetylacetonate, aluminum acetylacetonate, aluminum tris(ethylacetoacetate), and any combination thereof. The non-limiting examples of peroxides include hydrogen peroxide, metal chlorides, organometallic compounds, such as ferrocenes and zirconocenes, and any combination thereof. Preferred examples of the catalyst in the present invention are 4,4-methylenebis(cyclohexylamine), acetic acid, hydrochloric acid, platinum, platinum acetylacetonate, hydrogen peroxide, and dicumyl peroxide.

In the present invention, examples of the antioxidant agent include citric acid, gallate esters, tocopherols, other phenol-based antioxidants, amine-based antioxidants, phosphorous-based antioxidants, sulfur-based antioxidants, sugars, and vitamins.

Another aspect of the present invention is related to method of manufacturing a conductive coating composition, in particular the composition according to the present invention. Such method comprises preparing a dispersion of at least one carbon nanotube and at least one thermal acid generator in an aqueous solution; preparing a binder solution comprising at least one thermosetting monomer and/or binder, and optionally, at least one acid catalyst; and mixing the dispersion of carbon nanotube and the binder solution to obtain the conductive coating composition.

As to the nature and scope of each component (e.g. carbon nanotube, TAG, thermosetting monomer and/or binder, acid catalyst, etc.), reference can be made to the explanation given in the foregoing sections.

Further aspect of the present invention concerns a layer obtained or obtainable by using the composition according to the present invention. The layer according to the present invention can be used as a transparent conductor in electronic devices. More preferably, such layer functions as a transparent electrode, an antistatic layer, and/or an electromagnetic interference (EMI) shield layer in display device.

The transparent electrode in the present invention is understood to denote any type of electrode used in electronics devices, in particular display devices. Examples thereof include common electrode, pixel electrode, electrodes included in thin-film transistor (TFT), such as gate electrode, scanning electrode, and data (signal) electrode, and optional electrodes, such as segment electrode, and chevron electrode.

The layer according to the present invention may stand for high temperature of at least 85°C while showing a good flexibility, a satisfactory range of conductivity, and great hardness and transparency. In addition, it has been found that reliability as to such properties, in particular conductivity (surface resistance), can be attained upon exposure to heat and/or humid environment.

The layer can be formed by applying the compositions of the present invention on the substrate, in particular on a surface of glass substrate. Such application can be brought about for example using laser etching, wetting, such as dipping, printing, such as gravure printing and inkjet printing, coating, such as spin coating, bar coating, slit coating, spray coating, roll coating, and spreading, or deposition. The thickness of the layer on the substrate is preferably from 100 to 10,000 Å, more preferably 1,000 to 3,000 Å. After applying the composition on the substrate, the layer can be formed for example by curing. Typical temperatures for the curing are from 25 to 150°C, preferably 100 to 150°C. Typical curing time is from 5 to 30 min, preferably 10 to 30 min.

A still further aspect of the present invention concerns an electronic device at least comprising the layer according to the present invention. Representative examples of the electronic device in the present invention include display devices, such as LCD and OLED.

An additional aspect of the present invention concerns a process of manufacturing a layer, which is obtained or obtainable by using the composition according to the present invention.

The process for the manufacture of the layer preferably comprises (a) evenly spreading the composition according to the present invention on a surface of a substrate and (b) curing the composition spread on the surface.

Thusly-formed layer according to the present invention has generally a sheet resistance of 10³ to 10¹² ohm/square. If the layer is intended as the antistatic layer according to the present invention, it generally has a sheet resistance of 10⁷ to 10¹² ohm/square. Alternatively, the antistatic layer according to the present invention has a sheet resistance of 10³ to 10¹¹ ohm/square, preferably 10⁴ to 10⁸ ohm/square. In case the layer is intended as the EMI shield, it generally has a sheet resistance of 10³ to 10⁶ ohm/square. Also, the layer has generally a pencil hardness of equal to or more than 7 H, more preferably equal to or more than 9 H, which satisfies the requirement as a transparent conductive layer in display device, especially LCD device.

It has been surprisingly found that the TAG can be used as an excellent additive to enhance a stability of CNT formulation. Thus, a yet still further aspect of the present invention provides use of at least one thermal acid generator (TAG) as an additive in CNT-containing composition. As to the nature and scope of each component (e.g. CNT, and TAG, etc.), reference can be made to the explanation given in the foregoing sections.

The following examples illustrate the invention in further detail without however limiting it.

### Examples

### Example 1 : Preparation of Conductive Coating Solution

### Example 1-1 : Preparation of CNT dispersion

0.3 wt % of SWCNT powder, 0.2 wt % of polyacrylic acid dispersant, 1.0 wt % of TAG, and remainder of 1-propanol are incorporated to stirrer, and those components are mixed under stirring for 1 hour, and dispersed under ultrasonic with the following conditions: 2 cycles of 5 min. operation, then 1 min. break, and separation by centrifugation. The CNT dispersion is obtained.

### Example 1-2 : Preparation of binder solution

40 wt % of TEOS monomer, 11 wt % of 3.5% hydrochloric acid, 22.5 wt% of water, and remainder of 1-propanol are incorporated to stirrer, and those components are mixed under stirring for 24 hours, thus obtaining the binder solution.

### Example 1-3 : Preparation of CNT coating solution

66.75 wt % of the CNT dispersion from Example 1-1, 0.75 wt % of two surfactants, and 32.5 wt % of the binder solution from Example 1-2 are incorporated to stirrer. Those components are mixed under stirring for 1 hour, and dispersed under ultrasonic with the following conditions: 2 cycles of 5 min. operation, and 1 min. break. The CNT coating solution is obtained.

### Example 2 : Evaluation of coating films made of Conductive Coating Solution

The conductive coating solution according to Example 1 is supplied to a spin coater, and coated with rotation speed at 300 rpm for 3 seconds, 1000 rpm for 15 seconds, and 300 rpm for 3 seconds at a room temperature. The formed coating film using the conductive coating solution is treated in dry oven at a temperature of about 140°C for 10 min.

A sheet resistance, transmittance, surface hardness, thermal stability, and sheet uniformity of the coating film are evaluated, and summarized as below :
- Sheet resistance : measured using 2-point probe
- Transmittance : measured using UV-VIS spectrometer at 550 nm
- Surface hardness : measured using pencil hardness test method
- Sheet uniformity : deviation of resistance values at different points of the coating film were measured
- Reliability (on surface resistance) : measured coated substrate in high temperature (85°C) and temperature humidity (65°C/95%) bias using 2-point probe during 500 hours

The coating layer shows satisfactory sheet resistance, transmittance, hardness, and sheet uniformity, and especially excellent reliability on surface resistance.

## Claims

1. A composition comprising at least one carbon nanotube (CNT), at least one thermal acid generator (TAG), and at least one solvent.

2. The composition according to claim 1, wherein the TAG comprises at least one blocked acid selected from the group consisting of blocked sulfonic acid, blocked phosphoric acid, blocked antimonic acid, blocked triflic acid, and any combination thereof.

3. The composition according to claim 1 or 2, wherein the TAG comprises at least one hydrophobic group, in particular alkyl group or aryl group optionally substituted with one or more alkyl groups.

4. The composition according to any one of claims 1 to 3, wherein the CNT comprises single-wall carbon nanotube (SWCNT).

5. The composition according to any one of claims 1 to 4, further comprising at least one binder.

6. The composition according to claim 5, wherein the binder comprises at least one thermosetting silicone-based monomer and/or binder selected from the group consisting of trialkoxysilane, trichlorosilane, tetrachlorosilane, aminosilane-based binders, tetraalkoxysilane-based binders, and any combination thereof, especially tetraethoxysilane (TEOS), tetramethoxysilane (TMOS), TEOS-based binder, TMOS-based binder, and any combination thereof.

7. The composition according to any one of claims 1 to 6, wherein the solvent is selected from the group consisting of water ; aliphatic alcohols, such as methanol, ethanol, isopropanol, butanol, n-propylalcohol, ethylene glycol, propylene glycol, butanediol, neopentyl glycol, 1,3-pentanediol, 1,4-cyclohexanedimethanol, diethyleneglycol, polyethelene glycol, polybutylene glycol, dimethylolpropane, trimethylolpropane, sorbitol, esterification products of the afore-mentioned alcohols ; aliphatic ketones, such as methyl cellosolve, propyleneglycol methylether, diacetone alcohol, ethylacetate, butylacetate, acetone and methylethylketone ; ethers such as tetrahydrofuran, dibutyl ether, mono- and polyalkylene glycol dialkyl ethers ; aliphatic carboxylic acid esters ;
aliphatic carboxylic acid amides ; aromatic hydrocarbons ; aliphatic hydrocarbons ; acetonitrile ; aliphatic sulfoxides ; and any combination thereof.

8. The composition according to any one of claims 1 to 7, comprising the carbon nanotube in an amount of 0.01 to 1 wt % relative to a total weight of the composition.

9. The composition according to any one of claims 1 to 8, comprising the binder in an amount of 1 to 30 wt %, preferably 3 to 20 wt %, more preferably 5 to 10 wt % relative to a total weight of the composition.

10. The composition according to any one of claims 1 to 9, comprising the TAG in an amount of 0.01 to 3 wt % relative to a total weight of the composition.

11. A method of manufacturing a conductive coating composition, comprising:
preparing a dispersion of at least one carbon nanotube and at least one thermal acid generator in an aqueous solution;
preparing a binder solution comprising at least one thermosetting monomer and/or binder, and optionally, at least one acid catalyst; and
mixing the dispersion of carbon nanotube and the binder solution to obtain the conductive coating composition.

12. A layer obtainable or obtained by using the composition according to any one of claims 1 to 10.

13. The layer according to claim 12, which functions as a transparent electrode, an antistatic layer, and/or an electromagnetic interference (EMI) shield layer.

14. An electronic device, in particular display device, at least comprising the layer according to claim 12 or 13.

15. Use of at least one thermal acid generator (TAG) as an additive in CNT-containing composition.
